# EUROPEAN PATENT APPLICATION

(11) **EP 2 765 820 A1**
(43) Date of publication of application: **13.08.2014**
(21) Application number: 12838301.5
(22) Date of filing: 01.10.2012
(51) Int. Cl.: H04W 72/12, H04W 16/32, H04W 28/16, H04W 72/04

(54) **WIRELESS COMMUNICATIONS SYSTEM, WIRELESS BASE STATION DEVICE, USER TERMINAL, AND WIRELESS COMMUNICATIONS METHOD**

(30) Priority: 03.10.2011 JP 2011219464
(71) Applicant: NTT DOCOMO, INC., Chiyoda-ku Tokyo 100-6150 (JP)
(72) Inventor: NAGATA, Satoshi, Tokyo 100-6150 (JP); ABE, Tetsushi, Tokyo 100-6150 (JP)
(74) Representative: HOFFMANN EITLE
(86) International application number: PCT/JP2012/075396
(87) International publication number: WO 2013/051511

(57) **Abstract**

The present invention is designed to reduce interference against uplink signals of a user terminal connected to low transmission power base station, in a heterogeneous network. The radio communication method of the present invention includes, at the radio base station apparatus of the first cell having a predetermined cell radius, reporting, to a user terminal, information about radio resources in which an uplink signal of a user terminal connected to a macro base station and an uplink signal of a user terminal connected to a low transmission power base station of an LPN cell having a smaller radius than the cell radius of the macro cell, are made orthogonal to each other, and, at the user terminal, allocating the uplink signals to radio resources based on the radio resource information reported from the macro base station or the LPN, and transmitting the allocated uplink signals to the macro base station or the LPN.

## Description

### Technical Field

The present invention relates to a radio communication system, a radio base station apparatus, a user terminal and a radio communication method in a next generation mobile communication system.

### Background Art

In the UMTS (Universal Mobile Telecommunications System) network, for the purposes of improving spectral efficiency and improving the data rates, system features based on W-CDMA (Wideband Code Division Multiple Access) are maximized by adopting HSDPA (High Speed Downlink Packet Access) and HSUPA (High Speed Uplink Packet Access). For this UMTS network, for the purposes of further increasing high-speed data rates, providing low delay and so on, LTE (Long Term Evolution) has been under study (non-patent literature 1).

In the third-generation system, it is possible to achieve a transmission rate of maximum approximately 2 Mbps on the downlink by using a fixed band of approximately 5 MHz. Meanwhile, in the system of the LTE scheme, it is possible to achieve a transmission rate of about maximum 300 Mbps on the downlink and about 75 Mbps on the uplink by using a variable band which ranges from 1.4 MHz to 20 MHz. Furthermore, in the UMTS network, for the purpose of achieving further broadbandization and higher speed, successor systems of LTE have been under study as well (for example, LTE-Advanced (LTE-A) system).

In the LTE-A system, a technique to improve performance in a heterogeneous network (HetNet) is under study. This heterogeneous network refers to an overlay network which uses, in addition to a conventional macro base station (radio base station apparatus of a macro cell), base stations of various forms of low transmission power (low transmission power base stations) such as a pico base station (radio base station apparatus of a pico cell), a femto base station, an RRH (Remote Radio Head) base station and so on. Given the significance of a local area network, this heterogeneous network is expected as a technique to realize further increase of system capacity.

### Citation List

### Non-Patent Literature

Non-Patent Literature 1: 3GPP, TR25.912 (V7.1.0), "Feasibility Study for Evolved UTRA and UTRAN," Sept. 2006

### Summary of the Invention

### Technical Problem

Given that, in a heterogeneous environment, there is a significant difference between the transmission power of a macro base station and the transmission power of a low transmission power base station, and that there is a significant difference between the cell area which the macro base station covers and the cell area which the low transmission power base station covers, especially with a control channel and a reference signal (sounding reference signal) which a user terminal (UE) connected to the macro base station transmits on the uplink, there is a problem of causing interference against an uplink control channel and a reference signal of a user terminal connected to the low transmission power base station.

The present invention has been made in view of the above, and it is therefore an object of the present invention to provide a radio communication system, a radio base station apparatus, a user terminal and a radio communication method which can reduce interference against uplink signals of a user terminal that is connected to a low transmission power base station in a heterogeneous network.

### Solution to Problem

A radio communication system according to the present invention employs a network configuration in which a first cell having a predetermined cell radius and a second cell having a cell radius that is smaller than the cell radius of the first cell are overlaid, and this radio communication system has: a radio base station apparatus, which comprises a reporting section that reports, to a user terminal, information about radio resources in which an uplink signal of a user terminal connected to a base station of the first cell and an uplink signal of a user terminal connected to a low transmission power base station of the second cell are made orthogonal to each other; and a user terminal, which comprises an allocation section that allocates the uplink signals to radio resources based on the radio resource information.

A radio base station apparatus according to the present invention employs a network configuration in which a first cell having a predetermined cell radius and a second cell having a cell radius that is smaller than the cell radius of the first cell are overlaid, and this radio base station apparatus has a reporting section that reports, to a user terminal, information about radio resources in which an uplink signal of a user terminal connected to a base station of the first cell and an uplink signal of a user terminal connected to a low transmission power base station of the second cell are made orthogonal to each other.

A user terminal according to the present invention is a user terminal in a radio communication system that employs a network configuration in which a first cell having a predetermined cell radius and a second cell having a cell radius that is smaller than the cell radius of the first cell are overlaid, and this the user terminal has: an allocation section that allocates the uplink signals to radio resources based on radio resource information reported from a base station of the first cell or a low transmission power base station of the second cell; and a transmission section that transmits the allocated uplink signals to the base station or the low transmission power base station of the second cell.

A radio communication method according to the present invention is a radio communication method in a radio communication system that employs a network configuration in which a first cell having a predetermined cell radius and a second cell having a cell radius that is smaller than the cell radius of the first cell are overlaid, and this radio communication method includes the steps of: reporting, to a user terminal, information about radio resources in which an uplink signal of a user terminal connected to a base station of the first cell and an uplink signal of a user terminal connected to a low transmission power base station of the second cell are made orthogonal to each other; and at the user terminal: allocating the uplink signals to radio resources based on radio resource information reported from the base station or the low transmission power base station; and transmitting the allocated uplink signals to the base station or the low transmission power base station.

### Technical Advantage of the Invention

According to the present invention, it is possible to reduce interference against uplink signals of a user terminal that is connected to a low transmission power base station in a heterogeneous network.

### Brief Description of the Drawings

FIG. 1 is a diagram to explain a network environment;
FIG. 2 is a diagram to explain interference of a user terminal connected to a low transmission power base station;
FIG. 3 provides diagrams to explain orthogonalization between an uplink control channel signal of a user terminal connected to a low transmission power base station and a uplink control channel signal of a user terminal connected to a macro base station;
FIG. 4 provides diagrams to explain orthogonalization between an uplink control channel signal of a CoMP terminal and an uplink control channel signal of a user terminal connected to a macro base station;
FIG. 5 provides diagrams to explain orthogonalization between an SRS of a user terminal connected to a low transmission power base station and an SRS of a user terminal connected to a macro base station;
FIG. 6 provides diagrams to explain orthogonalization between an SRS of a CoMP terminal and an SRS of a user terminal connected to a macro base station;
FIG. 7 is a diagram to explain a system configuration of a radio communication system;
FIG. 8 is a diagram to explain an overall configuration of a radio base station apparatus;
FIG. 9 is a functional block diagram corresponding to a baseband processing section in a radio base station apparatus;
FIG. 10 is a diagram to explain an overall configuration of a user terminal; and
FIG. 11 is a functional block diagram corresponding to a baseband processing section of a user terminal.

### Description of Embodiments

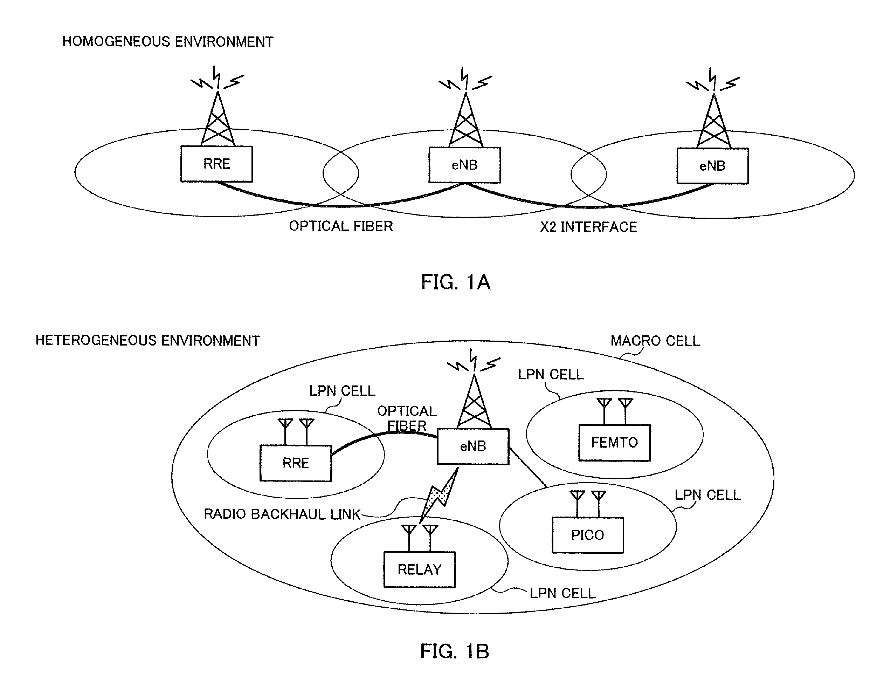

FIG. 1 is a diagram to explain a network environment. As a network environment, there are a homogeneous network environment, which is a conventional cellular environment such as shown in FIG. 1A, and a heterogeneous network environment, which is an overlay network using transmitting/receiving nodes of various modes with varying transmission power, such as shown in FIG. 1B.

In the homogeneous network, as shown in FIG. 1A, there is a configuration in which radio base station apparatuses (eNBs) are connected by an X2 interface, or a configuration which includes remote radio equipment (RRE) that is made remote from a radio base station apparatus (eNB) by optical fiber. In the homogeneous network, the size of the cells is approximately the same. On the other hand, in the heterogeneous environment, as shown in FIG. 1B, a cell (macro cell) having a predetermined cell radius, and cells (LPN (Low Power Node) cells) having a smaller cell radius than the cell radius of the macro cell, are overlaid. Here, the LPN cells refer to the cells of nodes that transmit/receive at power that is several tens of dB different from the power to transmit and receive with respect to the radio base station apparatus (macro base station) of the macro cell, and, to be more specific, refer to the cell of the femto base station, the cell of the pico base station, the cell of the relay apparatus, and the cell of the RRE.

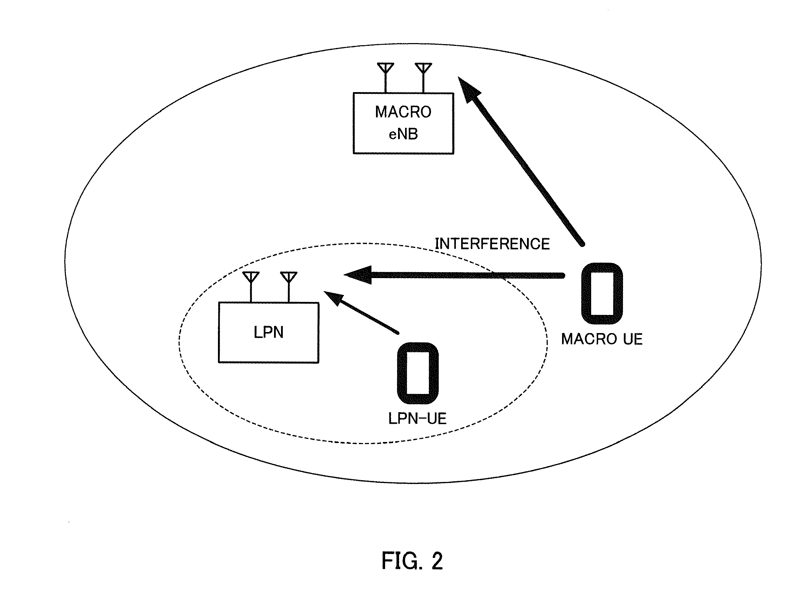

Given the significance of a local area network, the heterogeneous network is expected as a technique to realize further increase of system capacity. However, as described above, in a heterogeneous network, as shown in FIG. 2, a user terminal (macro UE) that is connected to a macro base station transmits uplink signals, including, for example, a control channel and a reference signal (SRS), by relatively large transmission power, and user terminals (LPN-UE, CoMP-UE, etc.) that are connected to a low transmission power base station and a base station adopting coordinated multiple point transmission transmit uplink signals, including, for example, control channels and reference signals(SRSs), by relatively small transmission power (several tens of dB small compared to the macro UE). Consequently, cases might occur where uplink signals which the macro UE transmits become interference against uplink signals of the LPN-UE.

The present inventor has contemplated the above and arrived at the present invention upon finding out that, in a heterogeneous network environment, it is possible to prevent uplink signals which a macro UE transmits from causing interference against uplink signals of an LPN-UE, by making the uplink signals of the macro UE and the uplink signals of the LPN-UE orthogonal to each other.

According to the present invention, uplink signals of a user terminal connected to the base station of the first cell (macro base station) having a predetermined cell radius and uplink signals of a user terminal connected to a low transmission power base station of a second cell having a smaller cell radius than the cell radius of the first cell, are made orthogonal to each other. The uplink signals may include, for example, uplink control channel signals, sounding reference signals, and so on.

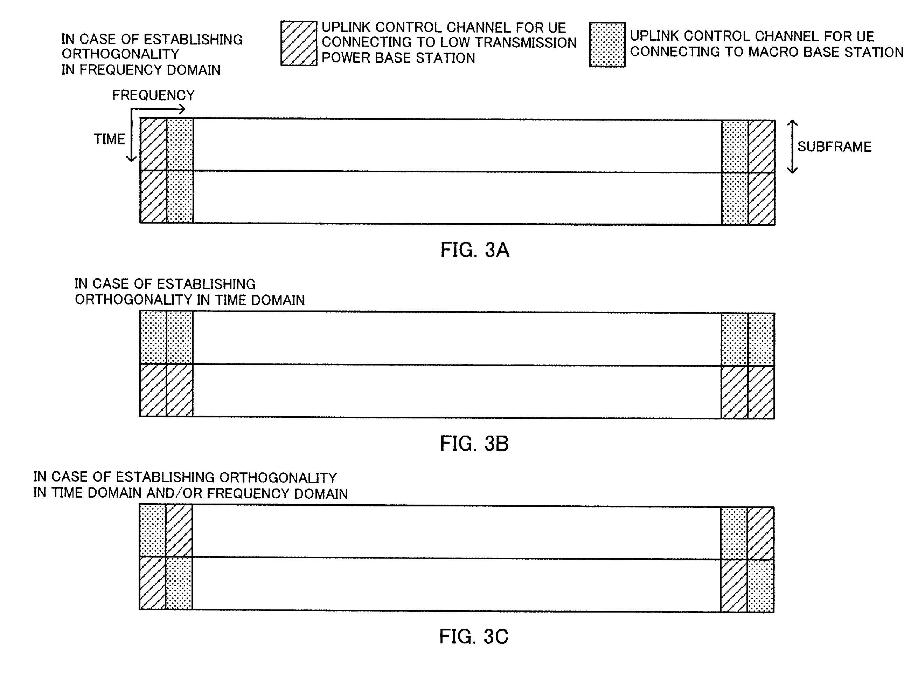

According to the present invention, to make uplink signals orthogonal, there are a method of establishing orthogonality in the frequency domain, a method of establishing orthogonality in the time domain, and a method of establishing orthogonality in the frequency domain and the time domain. FIG. 3 shows states in which an uplink control channel signal for a user terminal connected to a low transmission power base station (LPN) and an uplink control channel signal for a user terminal connected to a macro base station are orthogonalized. According to the method of establishing orthogonality in the frequency domain shown in FIG. 3A, in radio resources to allocate uplink control channel signals, the uplink control channel signal for the user terminal connected to the LPN and the uplink control channel signal for the user terminal connected to the macro base station are allocated to different frequency regions. According to the method of establishing orthogonality in the time domain shown in FIG. 3B, in radio resources to allocate uplink control channel signals, the uplink control channel signal for the user terminal connected to the LPN and the uplink control channel signal for the user terminal connected to the macro base station are allocated to different time regions (for example, different subframes). According to the method of establishing orthogonality in the frequency domain and the time domain shown in FIG. 3C, in radio resources to allocate uplink control channel signals, the uplink control channel signal for the user terminal connected to the LPN and the uplink control channel signal for the user terminal connected to the macro base station are allocated to different frequency regions and different time regions.

In the 3GPP (3rd Generation Partnership Project), coordinated multiple-point transmission (CoMP) is under study as a technique for realizing inter-cell orthogonalization. In CoMP transmission, a plurality of cells coordinate and perform signal processing for transmission for one user terminal UE or for a plurality of user terminal UEs. To be more specific, as for downlink transmission, simultaneous transmission of a plurality of cells, coordinated scheduling/beam forming, which adopt precoding, and so on are under study. In the 3GPP, application of above CoMP transmission, which is an inter-cell orthogonalization technique, to a heterogeneous network is under study. In this case, again, uplink signals which a macro UE transmits may become interference against uplink signals of an LPN-UE. Note that, when CoMP is adopted, it is reported that CoMP is adopted, from a base station to a user terminal, by higher layer signaling.

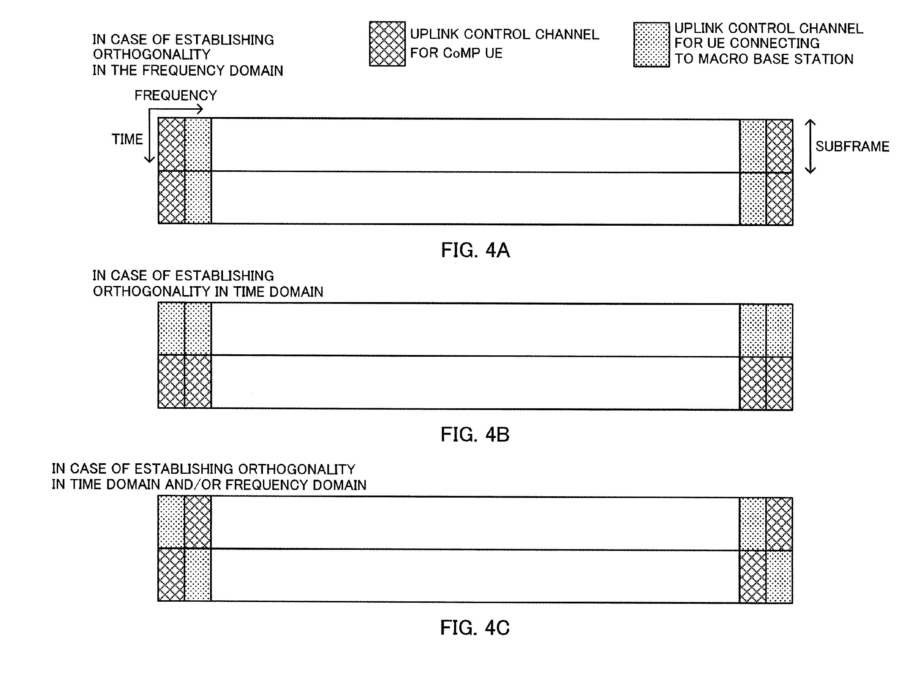

Consequently, in this case, too, the present invention may be applicable. FIG. 4 shows states in which an uplink control channel signal for a user terminal adopting CoMP and an uplink control channel signal for a user terminal connected to a macro base station are orthogonalized. According to the method of establishing orthogonality in the frequency domain shown in FIG. 4A, in radio resources to allocate uplink control channel signals, the uplink control channel signal for the user terminal adopting CoMP and the uplink control channel signal for the user terminal connected to the macro base station are allocated to different frequency regions. According to the method of establishing orthogonality in the time domain shown in FIG. 4B, in radio resources to allocate uplink control channel signals, the uplink control channel signal for the user terminal adopting CoMP and the uplink control channel signal for the user terminal connected to the macro base station are allocated to different time regions (for example, different subframes). According to the method of establishing orthogonality in the frequency domain and the time domain shown in FIG. 4C, in radio resources to allocate uplink control channel signals, the uplink control channel signal for the user terminal adopting CoMP and the uplink control channel signal for the user terminal connected to the macro base station are allocated to different frequency regions and different time regions.

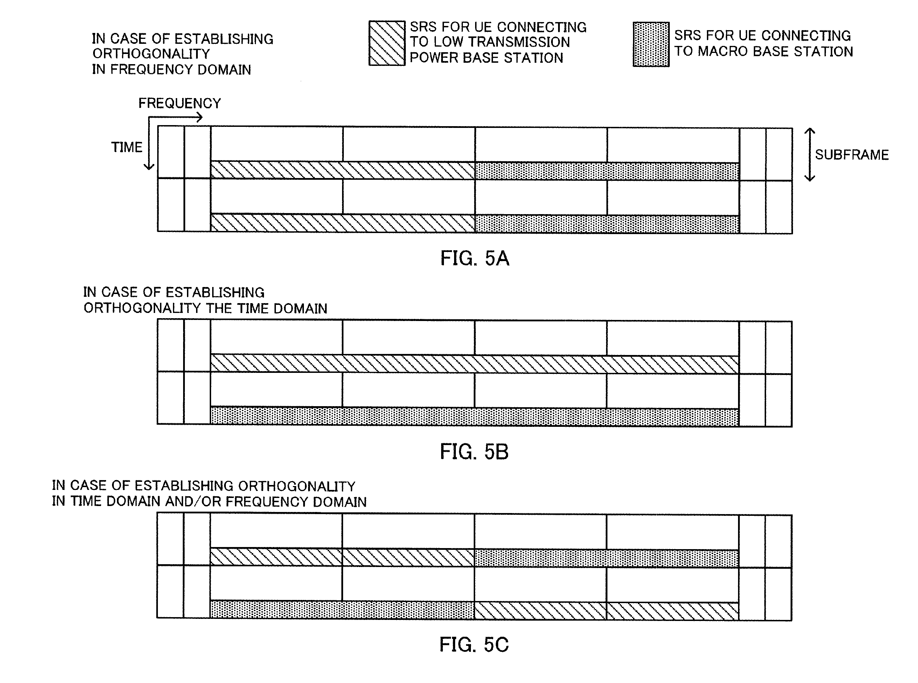

Also, as for the SRS, too, it is possible to apply the present invention in the same way as with uplink control channel signals. FIG. 5 shows states in which an SRS for a user terminal connected to an LPN and an SRS for a user terminal connected to a macro base station are orthogonalized. According to the method of establishing orthogonality in the frequency domain shown in FIG. 5A, in radio resources where SRSs are allocated, the SRS for the user terminal connected to the LPN and the SRS for the user terminal connected to the macro base station are allocated to different frequency regions. According to the method of establishing orthogonality in the time domain shown in FIG. 5B, in radio resources where SRSs are allocated, the SRS for the user terminal connected to the LPN and the SRS for the user terminal connected to the macro base station are allocated to different time regions (for example, in different subframes). According to the method of establishing orthogonality in the frequency domain and the time domain shown in FIG. 5C, in radio resources where SRSs are allocated, the SRS for the user terminal connected to the LPN and the SRS for the user terminal connected to the macro base station are allocated to different frequency regions and time regions.

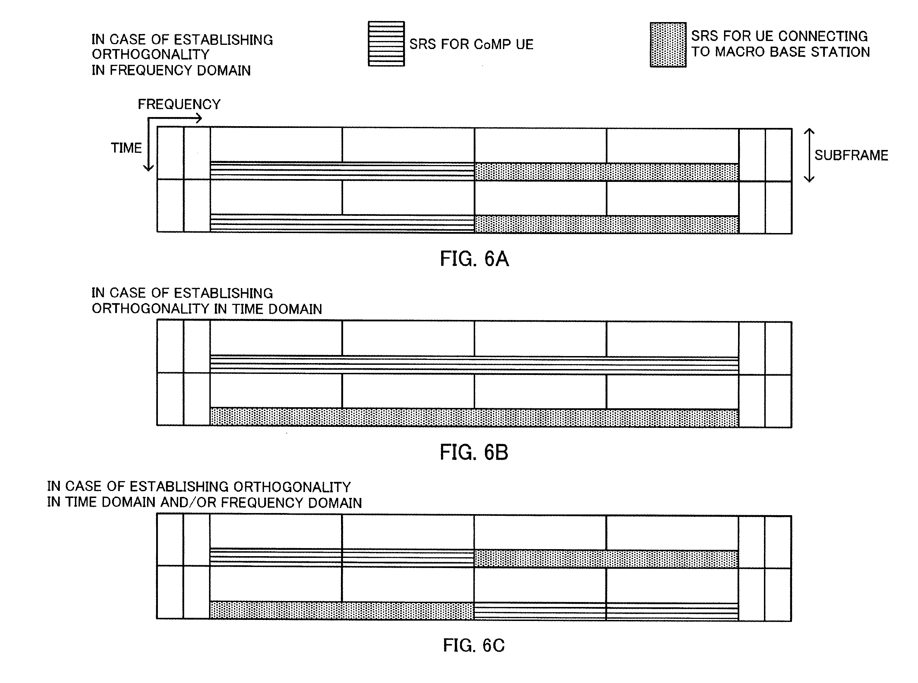

FIG. 6 shows states in which an SRS for a user terminal adopting CoMP and an SRS for a user terminal connected to a macro base station are orthogonalized. According to the method of establishing orthogonality in the frequency domain shown in FIG. 6A, in radio resources where SRSs are allocated, the SRS for the user terminal adopting CoMP and the SRS for the user terminal connected to the macro base station are allocated to different frequency regions. According to the method of establishing orthogonality in the time domain shown in FIG. 6B, in radio resources where SRSs are allocated, the SRS for the user terminal adopting CoMP and the SRS for the user terminal connected to the macro base station are allocated to different time regions (for example, different subframes). According to the method of establishing orthogonality in the frequency domain and the time domain shown in FIG. 6C, in radio resources where SRSs are allocated, the SRS for the user terminal adopting CoMP and the SRS for the user terminal connected to the macro base station are allocated to different frequency regions and different time regions.

With the present invention, to transmit uplink signals from user terminals in the allocations shown in FIG. 3 to FIG. 6, radio resource information is reported from radio base station apparatuses (macro base station, LPN, etc.) to user terminals. This radio resource information refers to information about radio resources where uplink signal for a user terminal connected to the base station of the first cell and uplink signal for a user terminal connected to the low transmission power base station of the second cell are made orthogonal to each other. Consequently, the radio resource information may be information about radio resources as to where uplink signals are allocated (information as to which radio resources the subject terminal can use), or may be information about radio resources as to where uplink signals for user terminals connected to other base stations are allocated (information as to which radio resources the subject terminal cannot use). Also, it is possible to combine and report these pieces of radio resource information.

Note that it is equally possible to fix the allocation to make the uplink signal or the SRS of a macro UE and the uplink signal or the SRS of an LPN-UE or a CoMP-UE orthogonal to each other, without reporting radio resource information.

For example, in the cases shown in FIG. 3 and FIG. 4, (1) to a user terminal (LPN-UE) connected to an LPN or a user terminal (CoMP-UE) adopting CoMP, information about radio resources where the subject terminal can allocate uplink control channel signals is reported from the LPN or the base station adopting CoMP (CoMP base station), and, to a user terminal (macro UE) connected to a macro base station, information about radio resources where the macro UE can allocate uplink control channel signals is reported from the macro base station. Alternatively, (2) to the user terminal (LPN-UE) connected to the LPN or the user terminal (CoMP-UE) adopting CoMP, information about radio resources where the subject terminal cannot allocate uplink control channel signals (information about radio resources which the macro UE uses) is reported from the LPN or the CoMP base station, and, to the user terminal (macro UE) connected to the macro base station, information about radio resources where the macro UE cannot allocate uplink control channel signals (information about radio resources which the LPN-UE uses) is reported from the macro base station. Note that, in the case of (2), it is also possible to report, to the LPN-UE or the CoMP-UE, information about radio resources where the subject terminal cannot allocate uplink control channel signals (information about radio resources which the macro UE uses) from the LPN or the CoMP base station, and not report radio resource information to the macro UE.

For example, in the cases shown in FIG. 5 and FIG. 6, (1) to an LPN-UE or a COMP-UE, information about radio resources where the subject terminal can allocate the SRS is reported from the LPN or the CoMP base station, and, to a macro UE, information about radio resources where the macro UE can allocate the SRS is reported from the macro base station. Alternatively, (2) to the LPN-UE or the CoMP-UE, information about radio resources where the subject terminal cannot allocate the SRS (information about radio resources which the macro UE uses) is reported from the LPN or the CoMP base station, and, to the macro UE, information about radio resources where the macro UE cannot allocate the SRS (information about radio resources which the LPN-UE uses) is reported from the macro base station. Note that, in the case of (2), it is also possible to report, to the LPN-UE or the CoMP-UE, information about radio resources where the subject terminal cannot allocate the SRS (information about radio resources which the macro UE uses) from the LPN or the CoMP base station, and not report radio resource information to the macro UE.

The reporting of radio resource information from the macro base station to the macro UE, the reporting of radio resource information from the CoMP base station to the CoMP-UE, and the reporting of radio resource information from the LPN to the LPN-UE are performed by higher layer signaling. Also, when necessary, it is also possible to transmit and receive the above-described radio resource information between the macro base station and the LPN or the CoMP base station, by optical fiber, radio backhaul link, X2 interface and so on.

Note that, according to the present invention, the macro base station and the low transmission power base station (LPN) or the CoMP base station may be connected by optical fiber, may be connected by radio link, or may be connected by a wired link such as X2 interface. Also, the relationship of the macro base station and the LPN or the CoMP base station may be a master-servant relationship or may be a relationship of mutual independence. The macro base station and the LPN or the CoMP base station assume a master-servant relationship when, for example, the cell formed by the LPN or the CoMP base station is a phantom cell.

In this way, according to the present invention, information about radio resources where an uplink signal of a macro UE and an uplink signal of an LPN-UE or a CoMP-UE are made orthogonal to each other is reported from a macro base station, an LPN or a CoMP base station, to the user terminals, and the user terminals allocate uplink signals to radio resource based on this radio resource information, and transmit the allocated uplink signals to the macro base station, the LPN or the CoMP base station. By this means, in a heterogeneous network, it is possible to reduce interference against uplink signals of user terminals connected to a low transmission power base station or a CoMP base station.

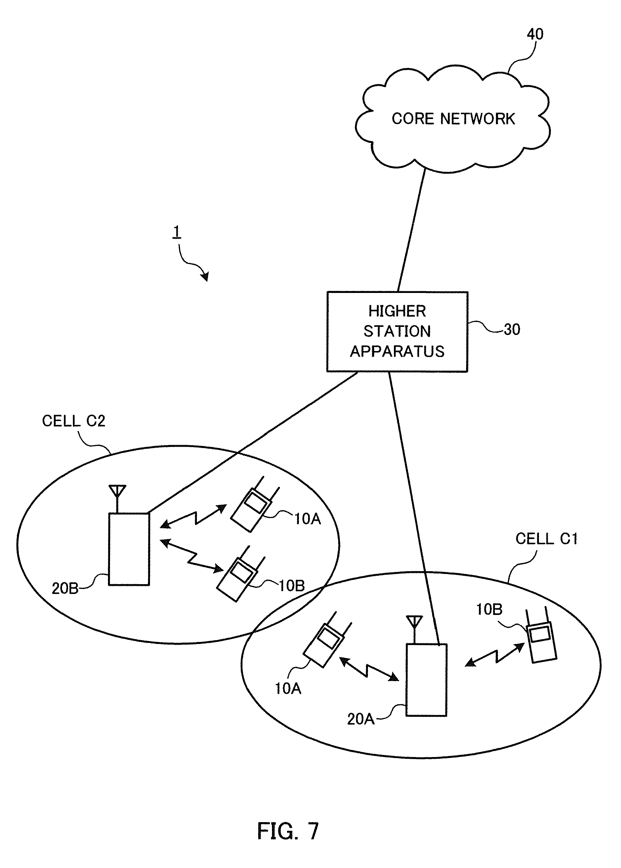

Now, a radio communication system according to an embodiment of the present invention will be described below in detail. FIG. 7 is a diagram to explain a system configuration of a radio communication system according to the present embodiment. Note that the radio communication system shown in FIG. 7 is a system to accommodate, for example, the LTE system or SUPER 3G. This radio communication system uses carrier aggregation, which makes a plurality of fundamental frequency blocks, in which the system band of the LTE system is one unit, as one. Also, this radio communication system may be referred to as "IMT-Advanced" or may be referred to as "4G."

As shown in FIG. 7, a radio communication system 1 is configured to include radio base station apparatuses 20A and 20B, and a plurality of the first and second user terminals 10A and 10B that communicate with the radio base station apparatuses 20A and 20B. The radio base station apparatuses 20A and 20B are connected with a higher station apparatus 30, and this higher station apparatus 30 is connected with a core network 40. Also, the radio base station apparatuses 20A and 20B are mutually connected by wire connection or by wireless connection. The first and second user terminals 10A and 10B are able to communicate with the radio base station apparatuses 20A and 20B in cells C1 and C2. Note that the higher station apparatus 30 includes, for example, an access gateway apparatus, a radio network controller (RNC), a mobility management entity (MME) and so on, but is by no means limited to these. Note that, like the macro cell shown in FIG. 1B, the cells C1 and C2 each employ a heterogeneous network configuration, and the LPN cell is overlaid upon the macro cell. Also, in the macro cell, when necessary, CoMP transmission is controlled by a plurality of base stations.

Although the first and second user terminals 10A and 10B may be either LTE terminals or LTE-A terminals, the following description will be given simply with respect to the first and second user terminals unless specified otherwise. Also, although, for ease of explanation, the radio base station apparatuses 20A and 20B and the first and second user terminals 10A and 10B will be described to perform radio communication, more generally, the first and second user terminals 10A and 10B may be user apparatuses (UEs) including user terminals and fixed terminal apparatuses.

In the radio communication system 1, as radio access schemes, OFDMA (Orthogonal Frequency Division Multiple Access) is applied to the downlink, and SC-FDMA (Single-Carrier-Frequency-Division Multiple Access) is applied to the uplink, but the uplink radio access scheme is not limited to this. OFDMA is a multi-carrier transmission scheme to perform communication by dividing a frequency band into a plurality of narrow frequency bands (subcarriers) and mapping data to each subcarrier. SC-FDMA is a single carrier transmission scheme to reduce interference between terminals by dividing, per terminal, the system band into bands formed with one or continuous resource blocks, and allowing a plurality of terminals to use mutually different bands.

The downlink communication channels include a PDSCH (Physical Downlink Shared Channel), which is used by the first and second user terminals 10A and 10B as a downlink data channel on a shared basis, and downlink L1/L2 control channels (PDCCH, PCFICH, and PHICH). Transmission data and higher control information are transmitted by the PDSCH. Scheduling information and so on for the PDSCH and the PUSCH are transmitted by the PDCCH (Physical Downlink Control Channel). The number of OFDM symbols to use for the PDCCH is transmitted by the PCFICH (Physical Control Format Indicator Channel). HARQ ACK/NACK for the PUSCH are transmitted by the PHICH (Physical Hybrid-ARQ Indicator Channel).

The uplink communication channels include a PUSCH (Physical Uplink Shared Channel), which is an uplink data channel that is used by each user terminal on a shared basis, and a PUCCH (Physical Uplink Control Channel), which is an uplink control channel. By means of this PUSCH, transmission data and higher control information are transmitted. Also, by means of the PUCCH, downlink received quality information (CQI), ACK/NACK and so on are transmitted.

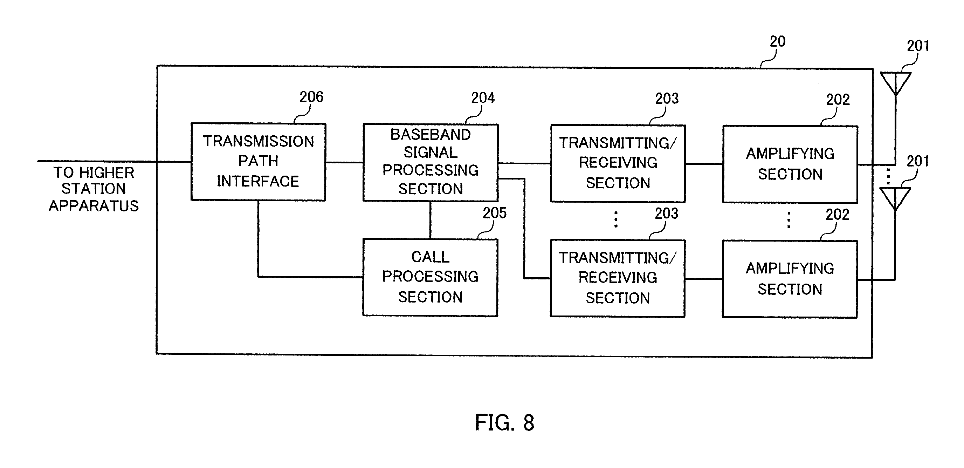

Now, referring to FIG. 8, an overall configuration of a radio base station apparatus according to the present embodiment will be explained. Note that the radio base station apparatuses 20A and 20B have the same configuration and therefore will be described simply as "radio base station apparatus 20." Also, the first and second user terminals 10A and 10B, which will be described later, have the same configuration and therefore will be described simply as "user terminal 10." The radio base station apparatus 20 has transmitting/receiving antennas 201, amplifying sections 202, transmitting/receiving sections 203, a baseband signal processing section 204, a call processing section 205, and a transmission path interface 206. Transmission data to be transmitted from the radio base station apparatus 20 to the user terminal on the downlink is input from the higher station apparatus 30, into the baseband signal processing section 204, via the transmission path interface 206.

In the baseband signal processing section 204, a downlink data channel signal is subjected to PDCP layer processes, division and coupling of transmission data, RLC (Radio Link Control) layer transmission processes such as an RLC retransmission control transmission process, MAC (Medium Access Control) retransmission control, including, for example, a HARQ (Hybrid Automatic Repeat reQuest) transmission process, scheduling, transport format selection, channel coding, an inverse fast Fourier transform (IFFT) process, and a precoding process. Furthermore, as for the signal of the physical downlink control channel, which is a downlink control channel, transmission processes such as channel coding and an inverse fast Fourier transform are performed.

Also, the baseband signal processing section 204 reports control information for allowing each user terminal 10 to perform radio communication with the radio base station apparatus 20, to the user terminals 10 connected to the same cell, by a broadcast channel. Information for communication in the cell includes, for example, the system bandwidth on the uplink and the downlink, identification information of a root sequence (root sequence index) for generating signals of random access preambles of the PRACH (Physical Random Access Channel), and so on.

The baseband signal output from the baseband signal processing section 204 is converted into a radio frequency band in the transmitting/receiving sections 203. The amplifying sections 202 amplify the radio frequency signals having been subjected to frequency conversion, and output the results to the transmitting/receiving antennas 201. Note that the transmitting/receiving sections 203 constitute a receiving means to receive uplink signals including information about phase differences between a plurality of cells and PMIs, and a transmitting means to transmit transmission signals by coordinated multiple point transmission.

On the other hand, as for a signal to be transmitted from the user terminal 10 to the radio base station apparatus 20 on the uplink, radio frequency signals that are received in the transmitting/receiving antennas 201 are amplified in the amplifying sections 202, converted into baseband signals by frequency conversion in the transmitting/receiving sections 203, and input in the baseband signal processing section 204.

The baseband signal processing section 204 applies an FFT process, an IDFT process, error correction decoding, a MAC retransmission control receiving process, and RLC layer and PDCP layer receiving processes, to the transmission data included in a baseband signal that is received on the uplink. The decoded signal is transferred to the higher station apparatus 30 through the transmission path interface 206.

The call processing section 205 performs call processing such as setting up and releasing communication channels, manages the state of the radio base station apparatus 20 and manages the radio resources.

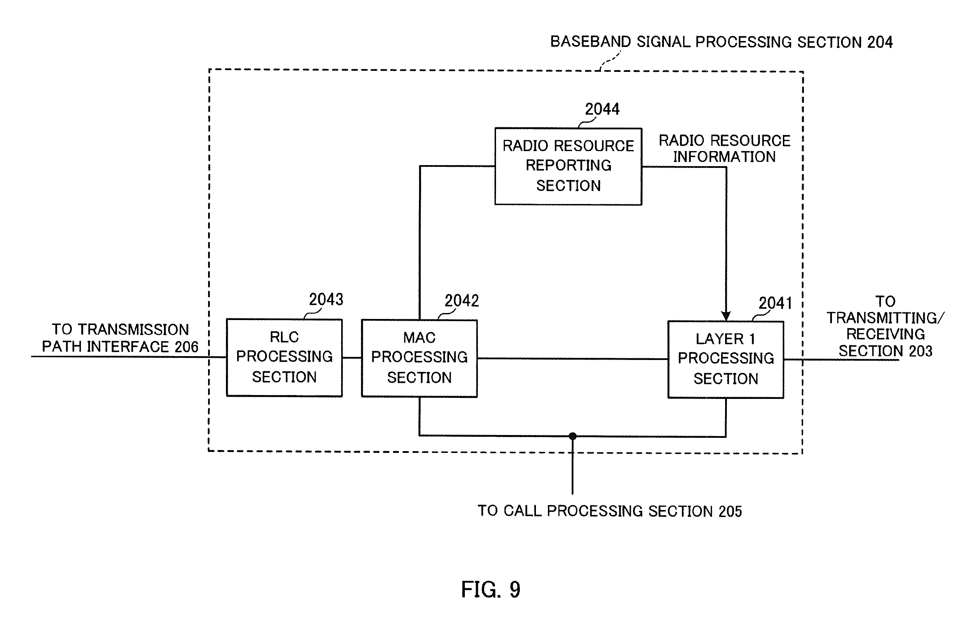

FIG. 9 is a block diagram showing a configuration of a baseband signal processing section in the radio base station apparatus shown in FIG. 8. The baseband signal processing section 204 is primarily formed with a layer 1 processing section 2041, a MAC processing section 2042, an RLC processing section 2043 and a radio resource reporting section 2044.

The layer 1 processing section 2041 mainly performs processes related to the physical layer. The layer 1 processing section 2041 performs, for a signal that is received on the uplink, processes including, for example, channel decoding, a discrete Fourier transform (DFT), frequency demapping, an inverse fast Fourier transform (IFFT) and data demodulation. Also, the layer 1 processing section 2041 performs processes for a signal to transmit on the downlink, including channel coding, data modulation, frequency mapping and an inverse fast Fourier transform (IFFT).

The MAC processing section 2042 performs processes such as MAC layer retransmission control for a signal that is received on the uplink, scheduling for the uplink/downlink, transport format selection for the PUSCH/PDSCH, resource block selection for the PUSCH/PDSCH.

The RLC processing section 2043 performs, for a packet that is received on the uplink/a packet to transmit on the downlink, packet division, packet combining, retransmission control in the RLC layer and so on.

The radio resource reporting section 2044 reports, to a user terminal, information about radio resources where uplink signals (uplink control channel signal and SRS) of a user terminal connected to the base station of the first cell (for example, a macro base station) and uplink signals (uplink control channel signal and SRS) of a user terminal connected to a low transmission power base station (LPN, CoMP base station, etc.) of a second cell, are made orthogonal to each other. The radio resource information may be, for example, radio resource information as to where uplink signals are allocated (information as to which radio resources the subject terminal can use) and radio resource information as to where uplink signals of a user terminal connected to another base station are allocated (information as to which radio resources the subject terminal cannot use).

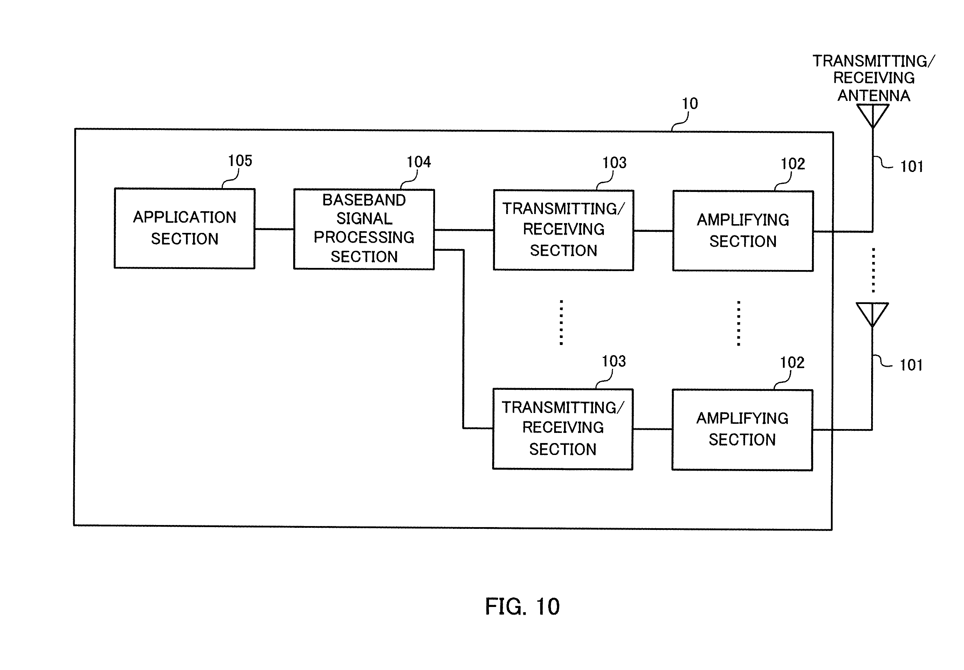

Next, referring to FIG. 10, an overall configuration of a user terminal according to the present embodiment will be described. An LTE terminal and an LTE-A terminal have the same hardware configurations in principle parts, and therefore will be described indiscriminately. A user terminal 10 has transmitting/receiving antennas 101, amplifying sections 102, transmitting/receiving sections (receiving sections) 103, a baseband signal processing section 104, and an application section 105.

As for downlink data, radio frequency signals that are received in the transmitting/receiving antennas 101 are amplified in the amplifying sections 102, and subjected to frequency conversion and converted into baseband signals in the transmitting/receiving sections 103. The baseband signals are subjected to receiving processes such as an FFT process, error correction decoding and retransmission control, in the baseband signal processing section 104. In this downlink data, downlink transmission data is transferred to the application section 105. The application section 105 performs processes related to higher layers above the physical layer and the MAC layer. Furthermore, in this downlink data, broadcast information is also transferred to the application section 105.

Meanwhile, uplink transmission data is input from the application section 105 to the baseband signal processing section 104. In the baseband signal processing section 104, a mapping process, a retransmission control (HARQ) transmission process, channel coding, a DFT process, and an IFFT process are performed. The baseband signal output from the baseband signal processing sections 104 is converted into a radio frequency band in the transmitting/receiving sections 103. After that, the radio frequency signal having been subjected to frequency conversion is amplified in the amplifying sections 102 and transmitted from the transmitting/receiving antennas 101. Note that the transmitting/receiving sections 103 constitute a transmitting means to transmit information about phase differences, information about connecting cells, selected PMIs and so on, to the radio base station apparatus eNBs of a plurality of cells, and a receiving means to receive downlink signals.

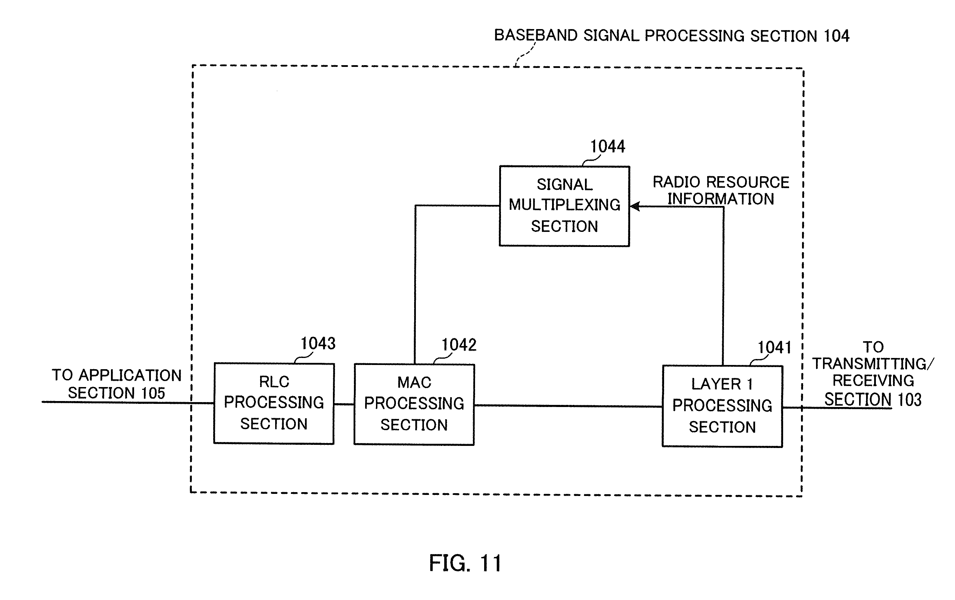

FIG. 11 is a block diagram showing a configuration of a baseband signal processing section in the user terminal shown in FIG. 10. The baseband signal processing section 104 is primarily formed with a layer 1 processing section 1041, a MAC processing section 1042, an RLC processing section 1043 and a signal multiplexing section 1044.

The layer 1 processing section 1041 mainly performs processes related to the physical layer. The layer 1 processing section 1041 performs, for example, for a signal that is received on the downlink, processes such as channel decoding, a discrete Fourier transform (DFT), frequency demapping, an inverse fast Fourier transform (IFFT), data demodulation and so on. Also, the layer 1 processing section 1041 performs processes for a signal to transmit on the uplink, including channel coding, data modulation, frequency mapping, an inverse Fourier transform (IFFT), and so on.

The MAC processing section 1042 performs, for a signal that is received on the downlink, MAC layer retransmission control (HARQ) and an analysis of downlink scheduling information (specifying the PDSCH transport format, specifying the PDSCH resource blocks), and so on. Also, the MAC processing section 1042 performs, for a signal to transmit on the uplink, MAC retransmission control, and an analysis of uplink scheduling information (specifying the PUSCH transport format, specifying the PUSCH resource blocks), and so on.

The RLC processing section 1043 performs, for a packet received on the downlink/a packet to transmit on the uplink, packet division, packet combining, retransmission control in the RLC layer and so on.

The signal multiplexing section 1044 maps the uplink signals (uplink control channel signal and SRS) to radio resources based on radio resource information reported from the base station. For example, a macro UE maps uplink signals (uplink control channel signal and SRS) to radio resources based on radio resource information reported from a macro base station, an LPN-UE maps uplink signals (uplink control channel signal and SRS) to radio resources based on radio resource information reported from an LPN, and a CoMP-UE maps uplink signals (uplink control channel signal and SRS) to radio resources based on radio resource information reported from a base station adopting CoMP.

In radio communication system having the above configuration, the macro base station reports, to the macro UE, information (the radio resource information showing the allocation positions shown in FIG. 3 to FIG. 6) about radio resources where uplink signals of the macro UE connected to the macro base station and uplink signals of the LPN-UE or the CoMP UE connected to the LPN or the CoMP base station are made orthogonal to each other. Similarly, the LPN reports, to the LPN-UE, information about radio resources in which uplink signals (uplink control channel signal and SRS) of the macro UE and uplink signals (uplink control channel signal and SRS) of the LPN-UE or the CoMP-UE are made orthogonal to each other. Similarly, the CoMP base station reports, to the CoMP-UE, information about radio resources in which uplink signals (uplink control channel signal and SRS) of the macro UE and uplink signals (uplink control channel signal and SRS) of the LPN-UE or the CoMP-UE are made orthogonal to each other.

The macro UE allocates uplink signals (uplink control channel signal and SRS) to radio resources based on radio resource information reported from the macro base station, and transmits the allocated uplink signals to the macro base station. Similarly, the LPN-UE allocates uplink signals (uplink control channel signal and SRS) to radio resources based on radio resource information reported from the LPN, and transmits the allocated uplink signals to the LPN. Similarly, the CoMP-UE allocates uplink signals (uplink control channel signal and SRS) to radio resources based on radio resource information reported from the CoMP base station, and transmits the allocated uplink signals to the CoMP base station.

In this way, according to the radio communication method of the present invention, information about radio resources, in which uplink signals for a macro UE and uplink signals for an LPN-UE or a CoMP-UE are made orthogonal to each other, is reported from a macro base station, an LPN or a CoMP base station to the connecting user terminals, respectively, and, the user terminals allocate uplink signals to radio resources based on the radio resource information, and transmit the allocated uplink signals to the macro base station, the LPN, or the CoMP base station. By this means, in a heterogeneous network, it is possible to reduce interference against uplink signals of user terminals connected to a low transmission power base station and a CoMP base station.

Now, although the present invention has been described in detail with reference to the above embodiments, it should be obvious to a person skilled in the art that the present invention is by no means limited to the embodiments described in this specification. The present invention can be implemented with various corrections and in various modifications, without departing from the spirit and scope of the present invention defined by the recitations of the claims. Consequently, the descriptions in this specification are provided only for the purpose of explaining examples, and should by no means be construed to limit the present invention in any way.

The disclosure of Japanese Patent Application No. 2011-219464, filed on October 3, 2011, including the specification, drawings and abstract, is incorporated herein by reference in its entirety.

## Claims

1. A radio communication system that employs a network configuration in which a first cell having a predetermined cell radius and a second cell having a cell radius that is smaller than the cell radius of the first cell are overlaid, the radio communication system comprising:
a radio base station apparatus, which comprises a reporting section configured to report, to a user terminal, information about radio resources in which an uplink signal of a user terminal connected to a base station of the first cell and an uplink signal of a user terminal connected to a low transmission power base station of the second cell are made orthogonal to each other; and
a user terminal, which comprises an allocation section configured to allocate the uplink signals to radio resources based on the radio resource information.

2. The radio communication system according to claim 1, wherein the uplink signals are orthogonalized in a time domain and/or a frequency domain.

3. The radio communication system according to one of claim 1 and claim 2, wherein the radio base station apparatus reports the radio resource information to the user terminal by higher layer signaling.

4. The radio communication system according to one of claim 1 to claim 3, wherein the uplink signals are an uplink control channel signal or a sounding reference signal.

5. The radio communication system according to claim 4, wherein the uplink control channel signal is an uplink control channel signal of a user terminal adopting coordinated multiple point transmission.

6. The radio communication system according to one of claim 1 to claim 5, wherein the radio base station apparatus is the base station of the first cell and/or the low transmission power base station of the second cell.

7. A radio base station apparatus in a radio communication system that employs a network configuration in which a first cell having a predetermined cell radius and a second cell having a cell radius that is smaller than the cell radius of the first cell are overlaid,
wherein the radio base station apparatus comprises a reporting section configured to report, to a user terminal, information about radio resources in which an uplink signal of a user terminal connected to a base station of the first cell and an uplink signal of a user terminal connected to a low transmission power base station of the second cell are made orthogonal to each other.

8. A user terminal in a radio communication system that employs a network configuration in which a first cell having a predetermined cell radius and a second cell having a cell radius that is smaller than the cell radius of the first cell are overlaid, wherein the user terminal comprises:
an allocation section configured to allocate the uplink signals to radio resources based on radio resource information reported from a base station of the first cell or a low transmission power base station of the second cell; and
a transmission section configured to transmit the allocated uplink signals to the base station or the low transmission power base station of the second cell.

9. A radio communication method in a radio communication system that employs a network configuration in which a first cell having a predetermined cell radius and a second cell having a cell radius that is smaller than the cell radius of the first cell are overlaid, the radio communication method comprising the steps of:
reporting, to a user terminal, information about radio resources in which an uplink signal of a user terminal connected to a base station of the first cell and an uplink signal of a user terminal connected to a low transmission power base station of the second cell are made orthogonal to each other; and
at the user terminal:
allocating the uplink signals to radio resources based on radio resource information reported from the base station or the low transmission power base station; and
transmitting the allocated uplink signals to the base station or the low transmission power base station.
